# FASCICULE DE BREVET EUROPEEN

(11) **EP 1 697 025 B1**
(45) Date de publication et mention de la délivrance du brevet: **13.08.2008**
(21) Numéro de dépôt: 04805400.1
(22) Date de dépôt: 05.11.2004
(51) Int. Cl.: B01D 71/02, C01B 13/02, B01J 19/00, B01J 23/00

(54) **AJOUT D'AGENT(S) BLOQUANT(S) DANS UNE MEMBRANE CERAMIQUE POUR BLOQUER LA CROISSANCE CRISTALLINE DES GRAINS LORS DU FRITTAGE SOUS ATMOSPHERE**
ZUSATZ VON BLOCKIERUNGSMITTEL(N) ZU EINER KERAMIKMEMBRAN ZUR BLOCKIERUNG DES KRISTALLWACHSTUMS VON KÖRNERN BEIM ATMOSPHÄRISCHEN SINTERN
ADDITION OF (A) BLOCKING AGENT(S) IN A CERAMIC MEMBRANE FOR BLOCKING CRYSTALLINE GROWTH OF GRAINS DURING ATMOSPHERIC SINTERING

(30) Priorité: 06.11.2003 FR 0350802
(43) Date de publication de la demande: 06.09.2006
(73) Titulaire: L'AIR LIQUIDE, Société Anonyme pour l'Etude et l'Exploitation des Procédés Georges Claude, 75007 Paris (FR)
(72) Inventeur: ETCHEGOYEN, Grégory, F-87570 Rilhac-Rancon (FR); CHARTIER, Thierry, F-87220 Feytiat (FR); DEL GALLO, Pascal, F-91410 Dourdan (FR)
(74) Mandataire: Conan, Philippe Claude
(86) Numéro de dépôt international: PCT/FR2004/002851
(87) Numéro de publication internationale: WO 2005/046850

(56) Documents cités:
- WO-A-00/59613
- WO-A-99/21649
- US-A- 6 146 549
- US-A1- 2001 002 990
- US-A1- 2002 022 568
- US-B1- 6 471 921

## Description

La présente invention a pour objet un matériau composite conducteur mixte, électronique et d'anions O²⁻, son procédé de préparation et son utilisation comme électrolyte solide dans un réacteur catalytique membranaire destiné notamment à la production de gaz de synthèse par reformage du méthane ou du gaz naturel.

Les réacteurs catalytiques membranaires (Catalytic Membrane Reactor en langue anglaise), dénommés ci-après CMR, élaborés à partir de matériaux céramiques, permettent la séparation de l'oxygène de l'air par diffusion de cet oxygène sous forme ionique à travers le matériau céramique et la réaction chimique de ce dernier avec du gaz naturel (principalement du méthane) sur des sites catalytiques (particules de Ni ou de métaux nobles) déposés en surface sur la membrane. La transformation du gaz de synthèse en carburant liquide par le procédé GTL (Gas To Liquid), nécessite un ratio molaire H₂/CO égal à 2. Or ce ratio de 2 peut être obtenu directement par un procédé mettant en oeuvre un CMR.

Cependant les matériaux céramiques ont un comportement fragile et des propriétés mécaniques directement dépendantes de la microstructure (taille et forme des grains, phases secondaires, porosité). Toutes choses égales par ailleurs, la résistance mécanique d'un matériau céramique utilisé en tant que CMR augmente lorsque la taille des grains qui le compose diminue. La taille des grains peut augmenter lors du fonctionnement en température et limiter la durée de vie du système. Différentes publications divulguent des solutions destinées à améliorer cette durée de vie.

Les brevets américains US 5,306,411 et US 5,478,444 divulguent des matériaux composites constitués d'un mélange d'un matériau conducteur électronique et d'un matériau conducteur ionique ce qui constitue ainsi un électrolyte solide de conductivité mixte.

Le brevet américain US 5,911,860 divulgue un matériau constitué essentiellement d'un conducteur mixte ou ionique et d'un constituant de nature chimique différente du conducteur mixte, préférentiellement un métal à hauteur de 0 à 20 % massique. Cette publication met en relief la nécessité d'une deuxième phase pour limiter la fissuration du matériau lors du frittage et augmenter ainsi ses propriétés mécaniques tout en améliorant son efficacité de catalyseur.

Le brevet américain US 6,187,157 divulgue des systèmes multi phasés comprenant une phase conductrice mixte ionique et électronique ou ionique seule et une deuxième phase conductrice électronique afin d'améliorer les propriétés catalytiques du matériau. La phase secondaire est généralement métallique et occupe 13 % du volume du matériau.

Le brevet américain US 6,332,964 divulgue, soit une membrane dense, soit un support poreux constitué d'une phase comprenant un oxyde métallique mixte ayant une conductivité ionique de type MCeOₓ, MZrOₓ (M : famille des lanthanides) ou mixte (LaSrGaMgOx) et d'une seconde phase ayant une conductivité électronique (métal, alliage métallique ou oxyde mixte de type LaSrMOx avec M: élément de transition), ladite seconde phase étant comprise entre 1 et 30% vol. de la matrice. La demande de brevet américain US 2002/0022568 divulgue un matériau de formule Ln₁₋ₓSr_{y}Ca_{x-y}MO_{3-δ} (Ln: famille des lanthanides et yttrium ou mélange des deux; M: métal de transition ou mélange de métaux de transition) ayant une conductivité mixte élevée, un coefficient d'expansion thermique bas et des propriétés mécaniques améliorées. Le brevet américain US 6,471,921 divulgue un matériau multiphasé conducteur mixte dont les phases secondaires ne participent pas significativement à la conduction mais permettent d'accroître les propriétés mécaniques du matériau. Les phases secondaires sont issues d'un écart au mélange stoechiométrique des précurseurs utilisés pour synthétiser le conducteur mixte et sont donc des sous produits de la réaction. La teneur en phases secondaires est comprise entre 0,1 et 20 % en masse. Le matériau principal est une phase Brown-Millerite de structure AₓA'_{x'}A"_{(2-x-x')}B_{y}B'_{y'}B"_{(2-y-y')}O_{5+z}, les phases secondaires sont de compositions (AA')₂(B,B')O₄, A'₂(B,B')O₄, (A,A')(B,B')₂O₄, ....etc. Toutes ces phases secondaires sont issues de la réaction de synthèse du matériau. Elles ne sont pas ajoutées avant la mise en forme du matériau.

La demanderesse a cherché à développer un matériau composite qui présente une structure fine et homogène avec des grains ayant une taille proche du micron et qui garantie de ce fait des propriétés mécaniques élevées et durables.

C'est pourquoi selon un premier aspect, l'invention a pour objet un matériau composite (M) comprenant, en mélange:
- au moins 75 % en volume d'un composé conducteur mixte électronique et d'anions oxygène O²⁻ (C₁) choisi parmi les oxydes céramiques dopés qui, à la température d'utilisation, sont sous forme d'un réseau cristallin présentant des lacunes en ions oxydes et plus particulièrement sous forme de phase cubique, de phase fluorite, de phase perovskite, de type aurivillius, de phase Brown - Millerite ou de phase pyrochlore, et
- de 0, 01 % à 25 % en volume d'un composé (C₂), différent du composé (C₁)choisi parmi des matériaux céramiques de type oxyde, les matériaux céramiques de type non-oxyde, les métaux, les alliages métalliques ou des mélanges de ces différents types de matériaux, et de 0% en volume à 2,5 % en volume d'un composé (C₃) produit d'au moins une réaction chimique représentée par l'équation:

   xF_{C1} + yF_{C2} ------> zF_{C3},

   équation dans laquelle F_{C1}, F_{C2} et F_{C3}, représentent les formules brutes respectives des composés C₁, C₂ et C₃ et x, y et z représentent des nombres rationnels supérieurs ou égaux à 0.

Dans l'exposé qui suit, le composé (C₂) est souvent dénommé agent bloquant, en ce que sa présence dans le matériau objet de la présente invention, inhibe la croissance cristalline des grains de composé (C₁) lors de l'une ou de plusieurs des étapes du procédé pour sa fabrication. Les grains de l'agent bloquant ont de préférence une forme inscriptible dans une sphère de diamètre compris entre 0,1 µm et 5 µm et de préférence inférieur à 1 µm, qu'il s'agisse d'une forme équiaxe ou encore de grains aciculaires, de longueur inférieure ou égale à 5 µm.

Par composé (C₁) ou (C₂), on indique que le matériau composite tel que défini précédemment peut comprendre :
soit un composé (C₁) en mélange avec un seul composé (C₂),
soit une association de plusieurs composés (C₁) en mélange avec un seul composé (C₂),
soit un composé (C₁) en mélange avec une association de plusieurs composés (C₂),
soit une association de plusieurs composés (C₁) en mélange avec une association de plusieurs composés (C₂)

Par proportion volumique, on entend dans la définition du matériau objet de la présente invention la proportion volumique dans le matériau final.

Selon un premier mode préféré de la présente invention, la proportion volumique en composé (C₃) dans le matériau est inférieure ou égale à 1,5 % en volume et elle est plus particulièrement inférieure ou égale à 0,5 % en volume.

Selon un aspect particulier de ce mode préféré, le composé (C₂) est essentiellement chimiquement inerte vis à vis du composé (C₁), dans la plage de température comprise entre la température ambiante et la température de frittage, cette plage incluant la température de fonctionnement et la proportion volumique du composé (C₃) dans le matériau tend vers 0.

Selon un deuxième aspect préféré de la présente invention, la proportion volumique en composé (C₂) est supérieure ou égale à 0,1 % et inférieure ou égale à 10 % et plus particulièrement, la proportion volumique en composé (C₂) est inférieure ou égale à 5 % et supérieure ou égale à 1%.

Dans le matériau tel que défini ci-dessus, le composé (C₂) est principalement choisi
soit parmi les matériaux céramiques de type oxyde comme par exemple, l'oxyde de magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium SrAl₂O₄ ou Sr₃Al₂O₆, les oxydes mixtes de structure perovskite comme par exemple Ba-TiO₃ ou CaTiO₃ ou, plus particulièrement de structure ABO_{3-δ} comme par exemple La_{0,5} Sr_{0,5} Fe_{0,9} Ti_{0,1} O_{3-δ} ou La_{0,6} Sr₀,₄ Fe_{0,9} Ga_{0,1} O_{3-δ},
soit parmi des matériaux de type non oxyde (carbure, nitrure, borure) comme par exemple le carbure de silicium (SiC), le nitrure de bore (BN) ou,
soit parmi des métaux comme par exemple le nickel, le platine, le palladium ou le rhodium.

Selon un premier aspect particulier du matériau tel que défini ci-dessus, le composé (C₁) est choisi parmi les oxydes de formule (I) :

(RₐO_{b})₁₋ₓ (R_{c}O_{d})ₓ (I),

dans laquelle :
Rₐ représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et b sont tels que la structure RₐO_{b} est électriquement neutre,
R_{c} représente au moins un atome divalent ou trivalent choisi principalement parmi le magnésium (Mg), le calcium (Ca), le baryum (Ba), le strontium (Sr), le gadolinium (Gd), le scandium (Sc), l'ytterbium (Yb), l'yttrium (Y), le samarium (Sm), l'erbium (Er), l'indium (In), le niobium (Nb) ou le lanthane (La), c et d sont tels que la structure RₑO_{d} est électriquement neutre,
   et dans laquelle x est généralement compris entre 0,05 et 0,30 et plus particulièrement, entre 0, 075 et 0,15.

Comme exemples d'oxyde de formule (I), il y a les zircones, les gallates ou les oxydes de cérium stabilisés.

Selon ce premier aspect particulier le composé (C₁) est de préférence choisi parmi les zircones stabilisées de formule (Ia) :

(ZrO₂)₁₋ₓ (Y₂O₃)ₓ, (Ia),

dans laquelle x est compris entre 0,05 et 0,15.

Selon un deuxième aspect particulier du matériau tel que défini ci-dessus, le composé (C₁) est choisi parmi les perovskites de formule (II) :

[Ma₁₋ₓ₋ᵤ Ma'ₓ Ma"ᵤ] [Mb_{1-y-v} Mb'_{y} Mb"ᵥ]O_{3-w} (II)

dans laquelle,
- Ma représente un atome choisi parmi le scandium, l'yttrium ou dans les familles des lanthanides, des actinides ou des métaux alcalino-terreux ;
- Ma' différent de Ma, représente un atome choisi parmi le scandium, l'yttrium ou dans les familles des lanthanides, des actinides ou des métaux alcalino-terreux ;
- Ma" différent de Ma et de Ma', représente un atome choisi parmi l'aluminium (Al), le gallium (Ga), l'indium (In), le thallium (Tl) ou dans la famille des métaux alcalino-terreux ;
- Mb représente un atome choisi parmi les métaux de transition ;
- Mb' différent de Mb, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
- Mb" différent de Mb et de Mb', représente un atome choisi parmi les métaux de transition, les métaux de famille des alcalino-terreux, l'aluminium (Al), l'indium (In), le gallium (Ga), le germanium (Ge), l'antimoine (Sb), le bismuth (Bi), l'étain (Sn) le plomb (Pb) ou le titane (Ti) ;

   0 < x ≤ 0,5 ;

   0 ≤ u ≤ 0,5 ;

   (x + u ≤ 0,5 ;

   0 ≤ y ≤ 0,9 ;

   0 ≤ v ≤ 0,9 ;

   0 ≤ (y + v) ≤ 0,9

   et w est tel que la structure en cause est électriquement neutre.
   Selon ce deuxième aspect particulier, le composé (C₁) est plus particulièrement choisi parmi les composés de formule (II) dans laquelle u est égal à zéro ou bien parmi les composés de formule (II) dans laquelle u est différent de zéro ou bien parmi les composés de formule (II) dans laquelle la somme (y + v) est égale à zéro ou bien parmi les composés de formule (II) dans laquelle la somme (y + v) est différente de zéro.

Dans la formule (II) telle que définie précédemment, Ma est plus particulièrement choisi parmi La, Ce, Y, Gd, Mg, Ca, Sr ou Ba. Dans ce cas, le composé (C₁) est de préférence un composé de formule (IIa) :

La₍₁₋ₓ₋ᵤ₎ Ma'ₓ Ma"ᵤ Mb_{(1y-v)} Mb'_{y} Mb"ᵥ O_{3-δ} (IIa),

correspondant à la formule (II), dans laquelle Ma représente un atome de lanthane.

Dans la formule (II) telle que définie précédemment, Ma' est plus particulièrement choisi parmi La, Ce, Y, Gd, Mg, Ca, Sr ou Ba. Dans ce cas, le composé (C₁) est de préférence un composé de formule (IIb) :

Ma₍₁₋ₓ₋ᵤ₎ Srₓ Ma"ᵤ Mb_{(1-y-v)} Mb'_{y} Mb"ᵥ O_{3-δ} (IIb),

correspondant à la formule (II), dans laquelle Ma' représente un atome de strontium.

Dans la formule (II) telle que définie précédemment, Mb est plus particulièrement choisi parmi Fe, Cr, Mn, Co, Ni ou Ti. Dans ce cas, le composé (C₁) est de préférence un composé de formule (IIc) :

Ma₍₁₋ₓ₋ᵤ₎ Ma'ₓ Ma"ᵤ Fe_{(1-y-v)} Mb'_{y} Mb"ᵥ O_{3-δ} (IIc),

correspondant à la formule (II), dans laquelle Mb représente un atome de fer.

Dans la formule (II) telle que définie précédemment, Mb' est plus particulièrement choisi parmi Co, Ni, Ti ou Ga et Mb" est plus particulièrement choisi parmi Ti ou Ga.

Dans ce cas, le composé (C₁) est de préférence un composé de formule (IId) :

La₍₁₋ₓ) Srₓ Fe ₍₁₋ᵥ₎ Mb"ᵥ O_{3-δ} (IId),

correspondant à la formule (II), dans laquelle u = 0, y = 0, Mb représente un atome de fer, Ma un atome lanthane et Ma' un atome de strontium. Dans la formule (II) telle que définie précédemment, Ma" est plus particulièrement choisi parmi Ba, Ca, Al ou Ga. Dans le matériau objet de la présente invention, le composé (C₁) est plus particulièrement un composé de formule :

La₍₁₋ₓ₋ᵤ₎ Srₓ Vlᵤ Fe₍₁₋ᵥ₎ Tiᵥ O_{3-δ}, La₍₁₋ₓ₋ᵤ₎ Srₓ Alᵤ Fe₍₁₋ᵥ₎ Gaᵥ O_{3-δ},

La₍₁₋ₓ₎ Srₓ Fe ₍₁₋ᵥ₎ Tiᵥ O_{3-δ}, La₍₁₋ₓ₎ Srₓ Ti₍₁₋ᵥ₎ Feᵥ O_{3-δ},

La₍₁₋ₓ₎ Srₓ Fe ₍₁₋ᵥ₎ Gaᵥ O_{3-δ} ou La₍₁₋ₓ₎ Srₓ Fe O_{3-δ}

et plus particulièrement un des composés suivants :

La_{0,6} Sr_{0,4} Fe_{0,9} Ga_{0,1} O_{3-δ}, ou La_{0,5} Sr_{0,5} Fe_{0,9} Ti_{0,1} O_{3-δ}.

Parmi les composés de structure cristalline de type perovskite et de formule (II) que l'on préfère mettre en oeuvre dans le matériau objet de la présente invention sont ceux de formule (II') : :

Ma^{(a)}₍₁₋ₓ₋ᵤ₎ Ma'^{(a-1)}ₓ Ma"^{(a")}ᵤ Mb^{(b)}_{(1-s-y-v)} Mb^{(b+1)}ₛ Mb'^{(b+β)}_{y} Mb"^{(b")}ᵥ O_{3-δ} (II'),

formule (II) dans laquelle :
a, a-1, a", b, (b+1), (b+β) et b" sont des nombres entiers représentant les valences respectives des atomes Ma, Ma', Ma", Mb, Mb' et Mb" ;
a, a", b, b", β, x, y, s, u, v et δ sont tels que la neutralité électrique du réseau cristallin est conservée,

a > 1,

a", b et b" sont supérieurs à zéro ;

-2 ≤ β ≤ 2 ;

a + b = 6 ;

0 < s < x ;

0 < x ≤ 0,5 ;

0 ≤ u ≤ 0,5 ;

(x + u) ≤ 0,5 ;

0 ≤ y ≤ 0,9 ;

0 ≤ v ≤ 0,9 ;

0 ≤ (y + v + s) ≤ 0,9

[u.(a" - a) + v.(b" - b) - x + s + βy + 2δ] = 0

et δₘᵢₙ < δ < δₘₐₓ avec

δₘᵢₙ = [u.(a - a") + v.(b - b") - βy] / 2 et

δₘₐₓ = [u.(a - a") + v.(b - b") - βy +x ] / 2

et Ma, Ma', Ma", Mb, Mb' et Mb" sont tels que définis précédemment Mb représentant un atome choisi parmi les métaux de transition aptes à exister sous plusieurs valences possibles ;

Selon un troisième aspect particulier du matériau tel que défini ci-dessus, le composé (C₁) est choisi parmi les matériaux de la famille des Brown - Millerites de formule (III) :

[Mc₂₋ₓ Mc'ₓ] [Md_{2-y} Md'_{y}] O_{6-w} (III)

dans laquelle,

Mc représente un atome choisi le scandium, l'yttrium ou dans les familles des lanthanides, des actinides ou des métaux alcalinoterreux ;
Mc' différent de Mc, représente un atome choisi parmi le scandium, l'yttrium ou dans les familles des lanthanides, des actinides ou des métaux alcalino-terreux ;
Md représente un atome choisi parmi les métaux de transition ; et
Md' différent de Md représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
x et y sont supérieurs ou égaux à 0 et inférieurs ou égaux à 2 et w est tel que la structure en cause est électriquement neutre.

Selon ce troisième aspect particulier du matériau objet de la présente invention, le composé (C₁) est plus particulièrement de formule (IIIa) :

[Mc₂₋ₓ Laₓ] [Md_{2-y} Fe_{y}] O_{6-w} (IIIa),

un composé de formule (IIIb) :

[Sr₂₋ₓ La_{x]} [Ga_{2-y} Md'_{y}] O_{6-w} (IIIb)

et plus particulièrement un composé de formule (IIIc) :

[Sr₂₋ₓ La_{x]} [Ga_{2-y} Fe_{y}] O_{6-w} (IIIc),

comme par exemple les composés de formules :

Sr_{1,4} La_{0,6} Ga Fe O_{5,3}, Sr_{1,6} La_{0,4} Ga_{1,2} Fe_{0,8} O₅,₃, Sr_{1,6} La_{0,4} Ga Fe O₅,₂,

Sr_{1,6} La_{0,4} Ga_{0,8} Fe_{1,2} O₅,₂, Sr_{1,6} La_{0,4} Ga_{0,6} Fe_{1,4} O₅,₂, Sr_{1,6} Ta_{0,4} Ga_{0,4} Fe_{1,6} O_{5,2},

Sr_{1,6} La_{0,4} Ga_{0,2} Fe_{1,8} O₅,₂, Sr_{1,6} La_{0,4} Fe₂ O₅,₂, Sr_{1,7} La_{0,3} Ga Fe O_{5,15},

Sr_{1,7} La_{0,3} Ga_{0,8} Fe_{1,2} O_{5,15}, Sr_{1,7} La_{0,3} Ga_{0,6} Fe_{1,4} O₅,₁₅, Sr_{1,7} La_{0,3} Ga_{0,4} Fe_{1,6} O₅,₁₅,

Sr_{1,7} La_{0,3} Ga_{0,2} Fe_{1,8} O₅,₁₅, Sr_{1,8} La_{0,2} Ga Fe O_{5,1}, Sr_{1,8} La_{0,2} Ga_{0,4} Fe_{1,6} O₅,₁ ou

Sr_{1,8} La_{0,2} Ga_{0,2} Fe_{1,8} O₅,₁.

Selon un aspect tout particulier de la présente invention, celui-ci a pour objet un matériau tel que défini précédemment dans lequel le composé (C₁) est choisi parmi les composés de formule :

La_{0,6} Sr_{0,4} Fe_{0,9} Ga_{0,1} O_{3-δ}, ou

La_{0,5} Sr_{0,5} Fe_{0,9} Ti_{0,1} O_{3-δ.},

et le composé (C₂) est choisi parmi l'oxyde de magnésium (MgO), l'oxyde d'aluminium (Al₂O₃), l'oxyde mixte de strontium et d'aluminium Sr₃Al₂O₆, l'oxyde mixte de baryum ou de titane (BaTiO₃).

Selon ce dernier aspect particulier, le matériau comportant entre 2% et 10% en volume d'oxyde de magnésium (MgO) et entre 90% et 98% en volume de La_{0,6} Sr_{0,4} Fe_{0,9} Ga_{0,1} O_{3-δ}, est préféré.

Selon un deuxième aspect, l'invention a pour objet un procédé de préparation du matériau tel que défini précédemment, caractérisé en ce qu'il comprend au moins une étape de frittage d'un mélange de poudres de composé (C₁) et de composé (C₂) en contrôlant la pression partielle en oxygène (pO₂) de l'atmosphère gazeuse environnant le milieu réactionnel.

Dans le procédé tel que défini ci-dessus la température de frittage du matériau est comprise entre 800 °C et 1 500 °C, préférentiellement entre 1000 °C et 1350 °C.

Le frittage inclut deux phénomènes simultanés qui sont généralement en concurrence, la densification du matériau par élimination de la porosité et la croissance granulaire. Si la densification du matériau doit être maximale pour son usage en tant que conducteur mixte, la croissance cristalline est, elle, dommageable pour ses propriétés mécaniques. L'étape de frittage doit donc être adaptée pour conduire à la densification de la pièce tout en minimisant la croissance des grains. Toutefois, il est souvent difficile de remplir ces deux conditions selon la nature des matériaux utilisés ou des conditions de frittage imposées. La présence d'une quantité adaptée de composé (C₂) dans le conducteur mixte permet d'assurer une densification satisfaisante en limitant voire en empêchant la croissance cristalline du conducteur (C₁).

Le procédé tel que défini ci-dessus est plus particulièrement mis en oeuvre de telle sorte que l'étape de frittage est réalisée sous atmosphère gazeuse comprenant une pression partielle d'oxygène inférieure ou égale à 0,1 Pa.

Selon un autre aspect particulier, le procédé tel que défini précédemment est caractérisé en ce que le mélange de poudres de composé (C₁) et de composé (C₂) est préalablement mis en forme puis délianté avant l'étape de frittage.

Selon un autre aspect, l'invention a pour objet l'utilisation du matériau tel que défini précédemment, comme matériau conducteur mixte d'un réacteur catalytique membranaire, destiné à être mis en oeuvre pour synthétiser du gaz de synthèse par oxydation catalytique du méthane ou du gaz naturel et/ou comme matériau conducteur mixte d'une membrane céramique, destinée à être mise en oeuvre pour séparer l'oxygène de l'air.

L'invention a enfin pour objet un procédé pour inhiber et/ou contrôler la croissance cristalline des grains de composés conducteurs mixtes électronique et par ions oxydes lors de l'étape de frittage dans la préparation d'un réacteur catalytique membranaire, caractérisé en ce qu'il comprend une étape préalable d'un mélange de 75% à 99,99% en volume de conducteur mixte (C₁) et de 0,01 % à 25 % en volume de composé (C₂).

Selon un aspect préféré du procédé tel que défini ci-dessus, celui-ci comprend une étape préalable d'un mélange de 90 à 98% en volume de La_{0,6} Sr_{0,4} Fe_{0,9} Ga_{0,1} O_{3-δ} et de 2% à 10% en volume d'oxyde de magnésium (MgO).

### Partie expérimentale

### Fabrication du matériau multiphasé

L'agent bloquant est généralement issu d'une poudre commerciale de grande pureté ou d'un mélange de poudres. Il peut également être synthétisé à partir de précurseurs oxydes et/ou nitrates et/ou carbonates mélangés et homogénéisés de manière adéquate. Ce mélange de précurseur est alors calciné à des hautes températures comprises entre 800°C et 1400°C pour réagir et former le ou les matériaux souhaités ce qui est contrôlé par diffraction des rayons X. La poudre de précurseur est broyée si nécessaire, de préférence par attrition, pour resserrer la distribution granulométrique et réduire la taille des grains à 0,5/µm par exemple. Les étapes de mise en forme du matériau composite constitué du mélange homogène de particules (C₂) dans la matrice (C₁) et de déliantage sont identiques à celles du conducteur mixte (C₁) seul.

Le traitement thermique à haute température est généralement adapté à la présence de l'agent bloquant qui facilite le frittage.

### Exemple 1 : Membrane céramique MgO (5% vol.) / La_{0,5}Sr_{0,5}Fe_{0,9}Ti_{0,1}O_{3-δ} (95% vol.)

L'exemple présenté est un mélange selon le protocole décrit précédemment constitué par 5 % volumique de magnésie (MgO) (composé C₂) et 95% volumique de matériau céramique La_{0,5}Sr_{0,5}Fe_{0,9}Ti_{0,1}O_{3-δ}. (Composé C₁) Le frittage est effectué sous azote à 1 150 °C durant 1,5 h.

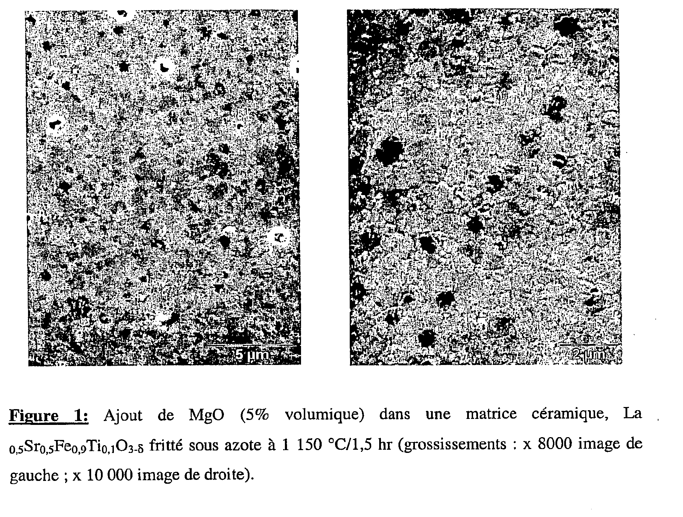

La figure 1 représente deux images obtenue par microscopie électronique à balayage (Figure 1) avec deux grossissements différents ( Figure 1a :x 8000 et Figure 1b : x 10 000). Ces images font apparaître que les grains de MgO sont répartis de manière homogène dans la matrice, de taille < 1 µm. Les grains de La_{0,5}Sr_{0,5}Fe_{0,9}Ti_{0,1}O_{3-δ} sont tous inférieurs à 2 µm.

Une membrane La_{0,5}Sr_{0,5}Fe_{0,9}Ti_{0,1}O_{3-δ} exempte de MgO et frittée dans les mêmes conditions (sous azote à 1150°C pendant 1 heure et demie) présente des tailles de grains compris entre 2 et 3µm).

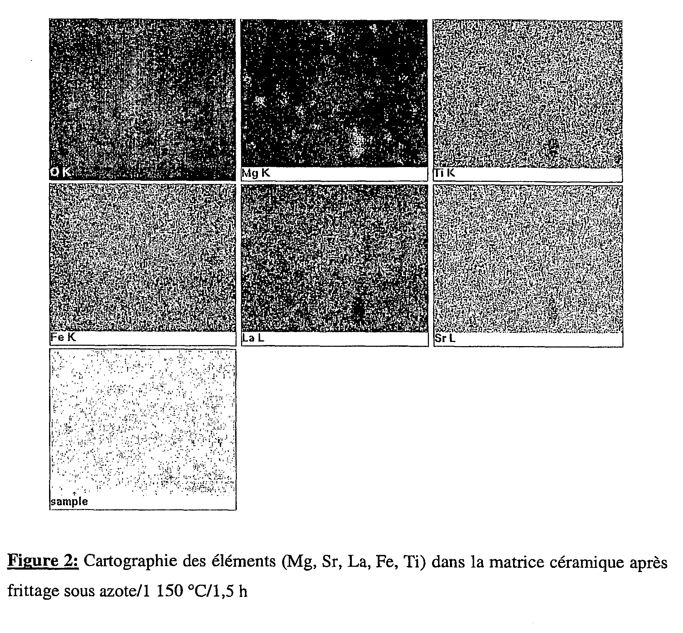

La figure 2 est une cartographie des éléments constituant la membrane issue d'une analyse EDS. On constate que tous les éléments sont répartis de manière homogène. Cette cartographie met clairement en évidence une non réactivité chimique de l'agent bloquant MgO vis à vis de La_{0,5}Sr_{0,5}Fe_{0,9}Ti_{0,1}O_{3-δ}).

### Exemple 2 : Membrane céramique MgO (5% vol.) / La_{0,6}Sr_{0,4}Fe_{0,9}Ga_{0,1}O_{3-δ} 95% vol.)

L'exemple présenté est un mélange selon le protocole décrit précédemment constitué par 5 % volume de magnésie (MgO) (composé C₂) et 95% de matériau céramique La_{0,6}Sr_{0,4}Fe_{0,9}Ga_{0.1}O_{3-δ}. (surnommé dans les figures LSFG ; composé C₁). Le frittage est effectué sous azote à 1 235°C durant deux heures.

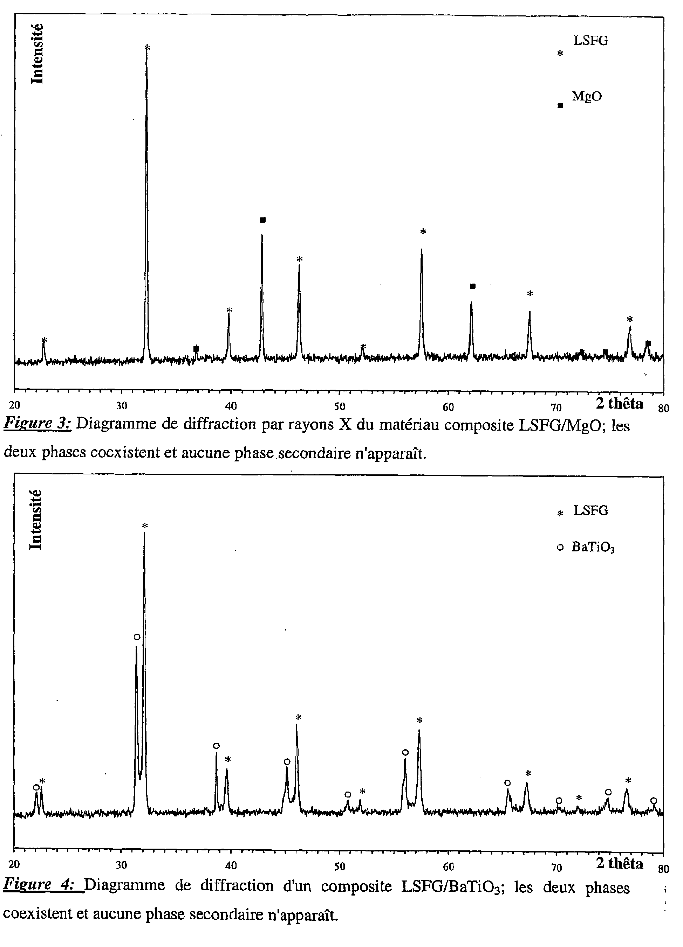

La figure 3 met en évidence par diffraction X le fait que le mélange MgO (40% vol.)/La_{0,6}Sr_{0.4}Fe_{0,9}Ga_{0,1}O_{3-δ} (60% vol.) n'aboutit pas après calcination 1200 °C/qq heures sous azote à de nouveaux composés. Le diagramme de diffraction RX ne révèle pas de réactivité chimique entre l'agent bloquant MgO et la matrice céramique La_{0,6}Sr_{0,4}Fe_{0,9}Ga_{0,1}O_{3-δ}.

La figure 4 met en évidence par diffraction X le fait que le mélange BaTiO₃ (40% vol.) / La_{0,6}Sr_{0,4}Fe_{0,9}Ga_{0,1}O_{3-δ}. (60% vol.) n'aboutit pas après calcination sous azote à 1200 °C/qq heures à de nouveaux composés. Le diagramme de diffraction RX ne révèle pas de réactivité chimique entre l'agent bloquant BaTiO₃ et la matrice céramique La_{0,6}Sr_{0,4}Fe_{0,9}Ga_{0,1}O_{3-δ}.

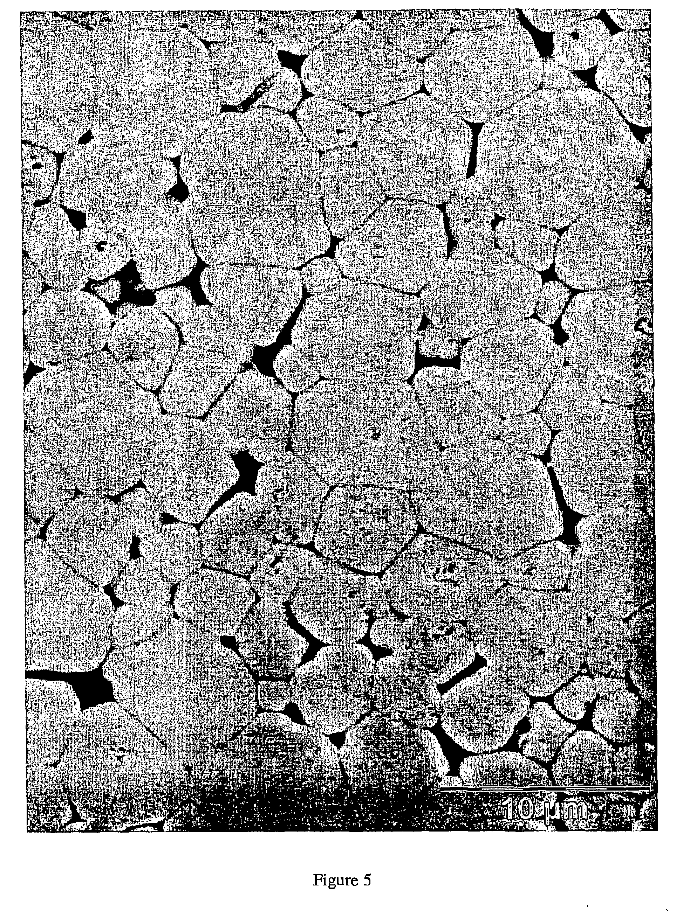

La figure 5 est une micrographie MEB réalisée en électrons secondaires du matériau ne contenant pas d'agent bloquant (grossissement : x 3 000 ; taille des grains entre 2 et 10 µm). L'étape de frittage a été réalisée sous azote pendant 2 heures à 1235 °C . (matériau de l'état de la technique)

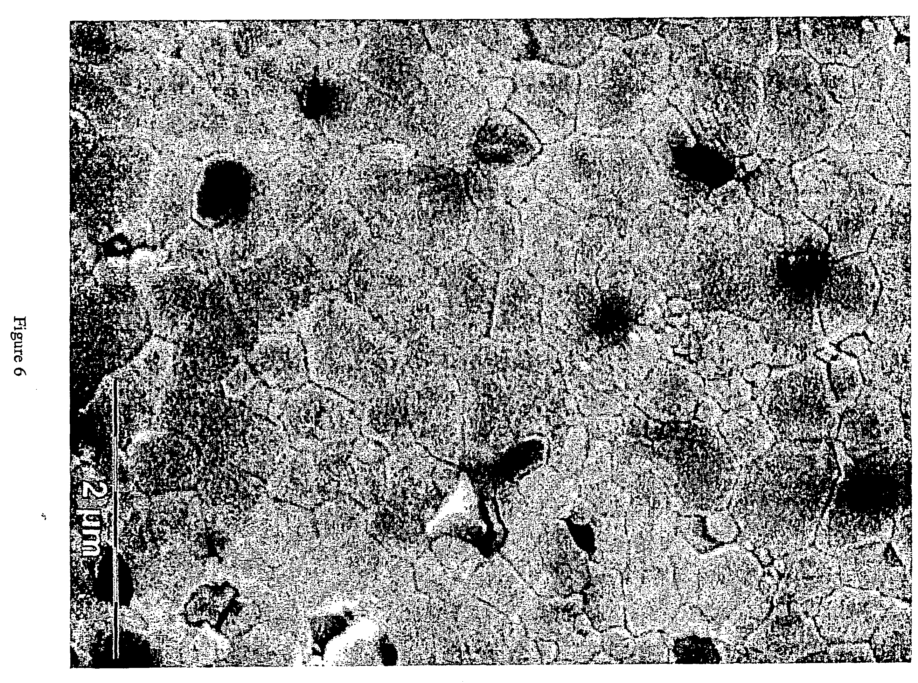

La figure 6 est une micrographie MEB réalisée en électrons secondaires du matériau La_{0,6}Sr_{0,4}Fe_{0,9}Ga_{0,1}O_{3-δ}, contenant 5% vol de oxyde de magnésium comme agent bloquant (grossissement : x 20 000 ; taille des grains entre 0,1 et 1 µm). L'étape de frittage a été réalisée sous azote pendant 2 heures à 1235 °C .

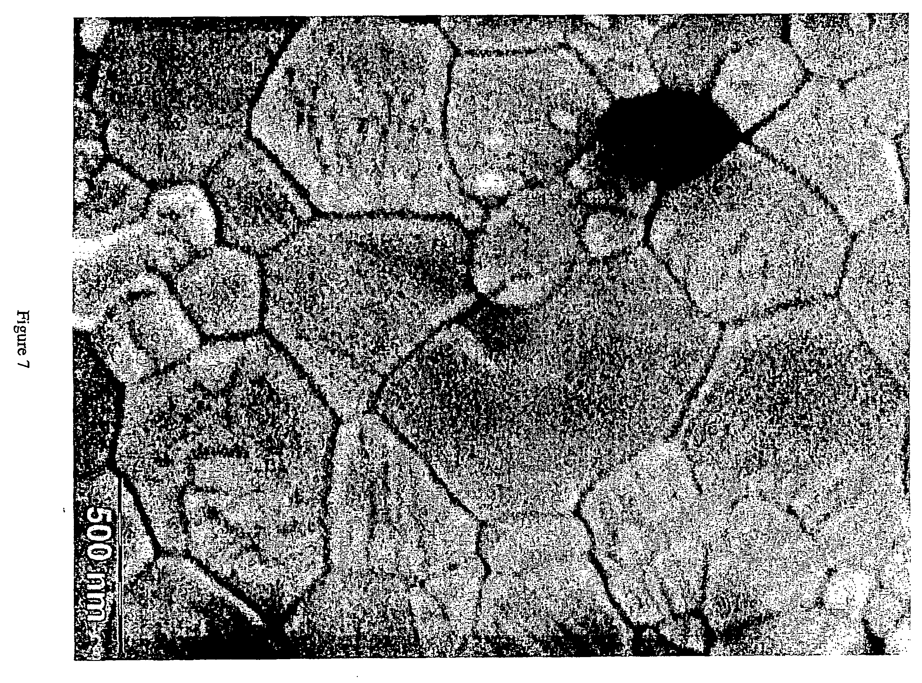

La figure 7 est une micrographie MEB réalisée en électrons secondaires du matériau La_{0,6}Sr_{0,4}Fe_{0,9}Ga_{0,1}O_{3-δ} contenant 5% vol d'oxyde de magnésium comme agent bloquant (grossissement : x 50 000 ; taille des grains entre 0,2 et 1,6 µm). L'étape de frittage a été réalisée sous azote pendant 2 heures à 1300°C).

### Exemple 3 : Influence de la présence d'oxyde de Magnésium (MgO) dans La_{0,6} Sr_{0,4} Fe_{0,9} Ga_{0,1} O_{3-δ} (LSFG) sur la perméabilité de a membrane à l'oxyène.

### a) Préparation des échantillons

On a pesé et mélangé des poudres de LSFG et MgO en proportions volumiques différentes pour obtenir des compositions (100-x)%(vol) LSFG, x% vol MgO.
avec x = 0 ; 2 ; 5.

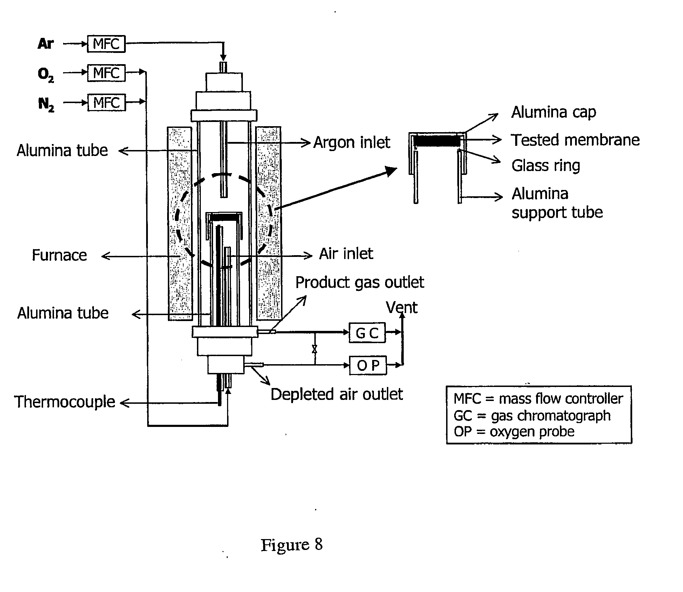

A partir de ces compositions, on prépare des membranes denses d'une épaisseur d'environ 1mm et de surface 3,1 cm² (LSFG (x = 0) ; LSFG/2M (x=2) ; LSFG/5M (x=5)) selon le procédé de coulage en bande (« Tape Casting » en langue anglaise) décrit dans « The Encyclopedia of Advanced Materials, Volume 4, Pergamon 1994, Cambridge, 2763-2767 de T. Chartier », et dans lequel l'étape de déliantage est réalisée avec un taux de chauffage lent et l'étape de frittage est réalisée entre 1250°C et 1350°C pendant 2h sous atmosphère à 90% d'azote et 10% d'oxygène : les mesures de perméation sont effectuées avec le dispositif de la figure 8 composé d'un four tubulaire et d'alimentation et d'analyseurs de gaz (chromatographie en phase gazeuse -sonde d'oxygène basée sur YSZ).

Les membranes denses en phase pure (LSFG) et composite (LSFG/2M ; LSFG/5M) sont déposées en haut d'un tube d'alumine et l'étanchéité entre l'intérieur et l'extérieur du tube est garantie par un anneau en verre situé entre le tube support et la membrane et par un chapeau en alumine pour le maintenir et pour exercer une pression au-dessus.

Tout le dispositif est inséré dans le four tubulaire qui est mis à chauffer jusqu'à la température de transition vitreuse de l'anneau en verre.

Avant le scellement, les membranes ont été soumises à un flux d'argon sur leur surface externe et à un flux d'air recombiné (79% N₂ + 21% O₂) sur leur face interne à des débits de 200ml (STP) /minutes. Les gaz en sortie du dispositif sont analysés avec un chromato-graphe pour valider la sélectivité à 100% vis à vis de l'oxygène et avec une sonde d'oxygène pour déterminer le flux de perméation de l'oxygène de chacun des matériaux.

### b) Les résultats

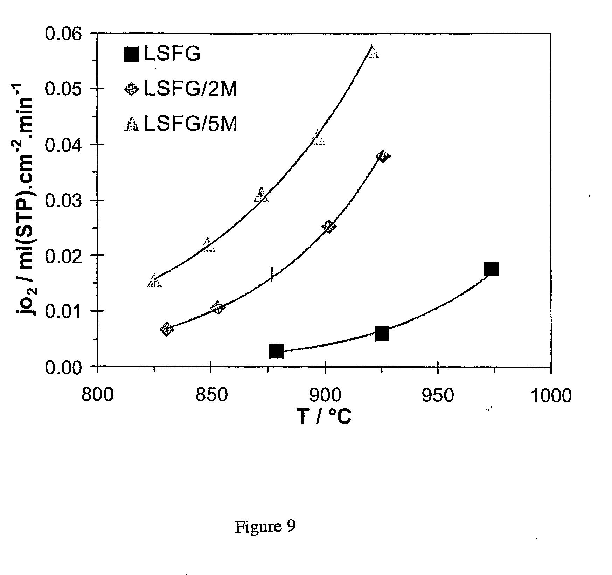

La figure 9 représente les courbes de variation du flux d'oxygène en fonction de la température pour chacun des matériaux. Elle met en évidence l'effet multiplicateur (EM) du flux d'oxygène grâce à la présence d'agents bloquants (à 950°C, EM = 4 pour LSFG/2M par rapport à LSFG et EM = 6 pour LSFG/5M par rapport à LSFG).

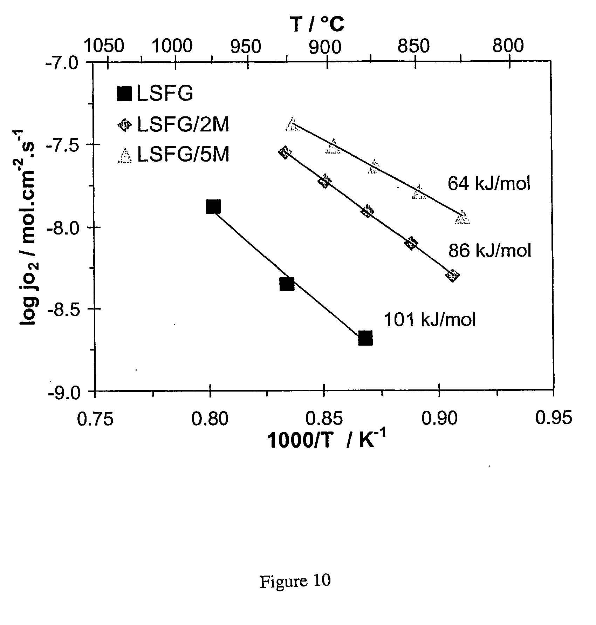

La figure 10 met en évidence l'impact de la microstructure de la membrane sur l'énergie d'activation du flux de perméation d'oxygène qui décroît lorsque la proportion en oxyde de magnésium croit.

## Revendications

1. Matériau composite (M) comprenant, en mélange :
- au moins 75 % en volume d'un composé conducteur mixte électronique et d'anions oxygène O²⁻ (C₁) choisi parmi les oxydes céramiques dopés qui, à la température d'utilisation, sont sous forme d'un réseau cristallin présentant des lacunes en ions oxydes et plus particulièrement sous forme de phase cubique, de phase fluorite, de phase perovskite, de type aurivillius, de phase Brown - Millerite ou de phase pyrochlore, et
- de 0, 01 % à 25 % en volume d'un composé (C₂), un agent bloquant qui inhibe la croissance crystalture différent du composé (C₁), choisi parmi des matériaux céramiques de types oxyde, les matériaux céramiques de type non-oxyde, les métaux, les alliages métalliques ou des mélanges de ces différents types de matériaux et,
- de 0 % en volume à 2,5 % en volume d'un composé (C₃) produit d'au moins une réaction chimique représentée par l'équation:
xF_{C1} + yF_{C2} ------> zF_{C3},
équation dans laquelle F_{C1}, F_{C2} et F_{C3}, représentent les formules brutes respectives des composés (C₁), (C₂) et (C₃) et x, y et z représentent des nombres rationnels supérieurs ou égaux à 0.

2. Matériau tel que défini à la revendication 1, dans lequel les grains de composé (C₂) ont une forme équiaxe de diamètre compris entre 0,1 µm et 5 µm et de préférence inférieur à 1 µm.

3. Matériau tel que défini à l'une des revendications 1 ou 2, dans lequel la proportion volumique en composé (C₃) est inférieure ou égale à 1,5 % et plus particulièrement inférieure ou égale à 0,5 % en volume.

4. Matériau tel que défini à la revendication 3, dans lequel la proportion volumique du composé (C₃) dans le matériau tend vers 0.

5. Matériau tel que défini à l'une des revendications 1 à 4, dans lequel la proportion volumique en composé (C₂) est supérieure ou égale à 0,1% et inférieure ou égale à 10 %.

6. Matériau tel que défini à la revendication 5, dans lequel la proportion volumique en composé (C₂) est inférieure ou égale à 5 %.

7. Matériau tel que défini à l'une des revendications 1 à 6, dans lequel le composé (C₂) est choisi parmi les matériaux de type oxyde et de préférence parmi l'oxyde de des grains de composé (C₁), magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium SrAl₂O₄ ou Sr3Al₂O₆, l'oxyde mixte de baryum et de titane (BaTiO₃₎, l'oxyde mixte de calcium et de titane (CaTiO₃), La_{0,5} Sr_{0,5} Fe_{0,9} Ti_{0,1} O_{3-δ} ou La_{0,6} Sr_{0,4} Fe_{0,9} Ga_{0,1} O_{3-δ}.

8. Matériau tel que défini à l'une des revendications 1 à 6, dans lequel le composé (C₂) est choisi parmi des matériaux de type non oxyde et de préférence parmi le carbure de silicium (SiC), le nitrure de bore (BN), le nickel (Ni), le platine (Pt), le palladium (Pd) ou le rhodium (Rh).

9. Matériau tel que défini à l'une des revendications 1 à 8, dans lequel le composé (C₁) est choisi parmi les oxydes de formule (I) :
(RₐO_{b})₁₋ₓ (R_{c}O_{d})ₓ (I),
dans laquelle :
Rₐ représente au moins un atome trivalent ou tétravalent principalement choisi parmi le bismuth (Bi), le cérium (Ce), le zirconium (Zr), le thorium (Th), le gallium (Ga) ou l'hafnium (Hf), a et b sont tels que la structure RₐO_{b} est électriquement neutre,
R_{c} représente au moins un atome divalent ou trivalent choisi principalement parmi le magnésium (Mg), le calcium (Ca), le baryum (Ba), le strontium (Sr), le gadolinium (Gd), le scandium (Sc), l'ytterbium (Yb), l'yttrium (Y), le samarium (Sm), l'erbium (Er), l'indium (In), le niobium (Nb) ou le lanthane (La), c et d sont tels que la structure R_{c}O_{d} est électriquement neutre,
et dans laquelle x est généralement compris entre 0,05 et 0,30 et plus particulièrement, entre 0, 075 et 0,15.

10. Matériau tel que défini à la revendication 9, dans lequel le composé (C₁) est choisi parmi les zircones stabilisées de formule (Ia) :
(ZrO₂)₁₋ₓ (Y₂O₃)ₓ, (Ia),
dans laquelle x est compris entre 0,05 et 0,15.

11. Matériau tel que défini à l'une des revendications 1 à 8, dans lequel le composé (C₁) est choisi parmi les oxydes perovskites de formule (II) :
[Ma₁₋ₓ₋ᵤ Ma'ₓ Ma"ᵤ] [Mb_{1-y-v} Mb'_{y} Mb"ᵥ]O_{3-w} (II)
dans laquelle,
- Ma représente un atome choisi parmi le scandium, l'yttrium ou dans les familles des lanthanides, des actinides ou des métaux alcalino-terreux ;
- Ma' différent de Ma, représente un atome choisi parmi le scandium, l'yttrium ou dans les familles des lanthanides, des actinides ou des métaux alcalino-terreux ;
- Ma" différent de Ma et de Ma', représente un atome choisi parmi l'aluminium (Al), le gallium (Ga), l'indium (In), le thallium (Tl) ou dans la famille des métaux alcalino-terreux ;
- Mb représente un atome choisi parmi les métaux de transition ;
- Mb' différent de Mb, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
- Mb" différent de Mb et de Mb', représente un atome choisi parmi les métaux de transition, les métaux de famille des alcalino-terreux, l'aluminium (Al), l'indium (In), le gallium (Ga), le germanium (Ge), l'antimoine (Sb), le bismuth (Bi), l'étain (Sn) le plomb (Pb) ou le titane (Ti) ;
0 < x ≤ 0,5 ;
0 ≤ u ≤ 0,5 ;
(x + u) ≤ 0,5 ;
0 ≤ y ≤ 0,9 ;
0 ≤ v ≤ 0,9 ;
0 ≤ (y + v) ≤ 0,9
et w est tel que la structure en cause est électriquement neutre.

12. Matériau tel que défini à la revendication 11, dans lequel le composé (C₁) est choisi parmi les composés de formule (IIa) :
La₍₁₋ₓ₋ᵤ₎ Ma'ₓ Ma"ᵤ Mb_{(1y-v)} Mb'_{y} Mb"ᵥ O_{3-δ} (IIa),
correspondant à la formule (II), dans laquelle Ma représente un atome de lanthane.

13. Matériau tel que défini à l'une des revendications 11 ou 12, dans lequel le composé (C₁) est choisi parmi les composés de formule (IIb) :
Ma₍₁₋ₓ₋ᵤ₎ Srₓ Ma"ᵤ Mb _{(1-y-v)} Mb'_{y} Mb"ᵥ O_{3-δ} (IIb),
correspondant à la formule (II), dans laquelle Ma' représente un atome de strontium.

14. Matériau tel que défini à l'une des revendications 11 à 13, dans lequel le composé (C₁) est choisi parmi les composés de formule (IIc) :
Ma₍₁₋ₓ₋ᵤ₎ Ma'ₓ Ma"ᵤ Fe_{(1-y-v)} Mb'_{y} Mb"ᵥ O_{3-δ} (IIc),
correspondant à la formule (II), dans laquelle Mb représente un atome de fer.

15. Matériau tel que défini à l'une des revendications 11 à 14, dans lequel le composé (C₁) est choisi parmi les composés de formule (IId) :
La₍₁₋ₓ₎ Srₓ Fe ₍₁₋ᵥ₎ Mb"ᵥ O_{3-δ} (IId),
correspondant à la formule (II), dans laquelle u = 0, y = 0, Mb représente un atome de fer, Ma un atome lanthane et Ma' un atome de strontium.

16. Matériau tel que défini à l'une des revendications 11 à 15, dans lequel le composé (C₁) est un composé de formule :
La₍₁₋ₓ₋ᵤ₎ Srₓ Alᵤ Fe₍₁₋ᵥ₎ Tiᵥ O_{3-δ},
La₍₁₋ₓ₋ᵤ₎ Srₓ Alᵤ Fe₍₁₋ᵥ₎ Gaᵥ O_{3-δ},
La₍₁₋ₓ₎ Srₓ Fe ₍₁₋ᵥ₎ Tiᵥ O_{3-δ},
La₍₁₋ₓ₎ Srₓ Ti₍₁₋ᵥ₎ Feᵥ O_{3-δ},
La₍₁₋ₓ₎ Srₓ Fe ₍₁₋ᵥ₎ Gaᵥ O_{3-δ} ou
La₍₁₋ₓ₎ Srₓ Fe O_{3-δ}

17. Matériau tel que défini à la revendication 16 de formule :
La_{0,6} Sr_{0,4} Fe_{0,9} Ga_{0,1} O_{3-δ},
ou
La_{0,5} Sr_{0,5} Fe_{0,9} Ti_{0,1} O_{3-δ}.

18. Matériau tel que défini à l'une des revendications 11 à 17, dans lequel le composé (C₁) est choisi parmi ceux de formule (II') :
Ma^{(a)}₍₁₋ₓ₋ᵤ₎ Ma'^{(a-1)}ₓ Ma"^{(a")}ᵤ Mb^{(b)}_{(1-s-y-v)} Mb^{(b+1)}ₛ Mb'^{(b+β)}_{y} Mb"^{(b")}ᵥ O_{3-δ} (II'),
formule (II') dans laquelle : a, a-1, a", b, (b+1), (b+β) et b" sont des nombres entiers représentant les valences respectives des atomes Ma, Ma', Ma", Mb, Mb' et Mb" ; a, a", b, b", β, x, y, s, u, v et δ sont tels que la neutralité électrique du réseau cristallin est conservée,
a > 1,
a", b et b" sont supérieurs à zéro ;
- 2 ≤ β 2 ;
a+b=6;
0 < s < x ;
0 < x ≤ 0,5 ;
0 ≤ u ≤ 0,5 ;
(x + u) ≤ 0,5 ;
0 ≤ y ≤ 0,9 ;
0 ≤ v ≤ 0,9 ;
0 ≤ (y + v + s) ≤ 0,9
[u.(a" - a) + v.(b" - b) - x + s + βy + 2δ] = 0
et δₘᵢₙ < δ < δₘₐₓ avec
δₘᵢₙ = [u.(a - a") + v.(b - b") - βy ] / 2 et
δₘₐₓ = [u.(a - a") + v.(b - b") - βy +x ] / 2
et Ma, Ma', Ma", Mb, Mb' et Mb" sont tels que définis précédemment Mb représentant un atome choisi parmi les métaux de transition aptes à exister sous plusieurs valences possibles ;

19. Matériau tel que défini à l'une des revendications 1 à 8, dans lequel le composé (C₁) est choisi parmi les oxydes de formule (III) :
[Mc₂₋ₓ Mc'ₓ] [Md_{2-y} Md'_{y}] O_{6-w} (III)
dans laquelle :
Mc représente un atome choisi le scandium, l'yttrium ou dans les familles des lanthanides, des actinides ou des métaux alcalino-terreux ;
Mc' différent de Mc, représente un atome choisi parmi le scandium, l'yttrium ou dans les familles des lanthanides, des actinides ou des métaux alcalino-terreux ;
Md représente un atome choisi parmi les métaux de transition ; et
Md' différent de Md représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
x et y sont supérieurs ou égaux à 0 et inférieurs ou égaux à 2 et w est tel que la structure en cause est électriquement neutre.

20. Matériau tel que défini à la revendication 19, dans lequel le composé (C₁) est de formule (IIIa) :
[Mc₂₋ₓ Laₓ] [Md_{2-y} Fe_{y}] O_{6-w} (IIIa),
un composé de formule (IIIb) :
[Sr₂₋ₓ Laₓ] [Ga_{2-y} Md'_{y}] O_{6-w} (IIIb)
et plus particulièrement un composé de formule (IIIc) :
[Sr₂₋ₓ Laₓ] [Ga_{2-y} Fe_{y}] O_{6-w} (IIIc),

21. Matériau tel que défini à la revendication 20, dans lequel le composé (C₁) est de formule :
Sr_{1,4} La_{0,6} Ga Fe O₅,₃,
Sr_{1,6} La_{0,4} Ga_{1,2} Fe_{0,8} O₅,₃,
Sr_{1,6} La_{0,4} Ga Fe O_{5,2},
Sr_{1,6} La_{0,4} Ga_{0,8} Fe_{1,2} O₅,₂,
Sr_{1,6} La_{0,4} Ga_{0,6} Fe_{1,4} O₅,₂,
Sr_{1,6} La_{0,4} Ga_{0,4} Fe_{1,6} O₅,₂,
Sr_{1,6} La_{0,4} Ga_{0,2} Fe_{1,8} O_{5,2},
Sr_{1,6} La_{0,4} Fe₂ O₅,₂,
Sr_{1,7} La_{0,3} Ga Fe O_{5,15},
Sr_{1,7} La_{0,3} Ga_{0,8} Fe_{1,2} O_{5,15},
Sr_{1,7} La_{0,3} Ga_{0,6} Fe_{1,4} O_{5,15},
Sr_{1,7} Ta_{0,3} Ga_{0,4} Fe_{1,6} O_{5,15},
Sr_{1,7} La_{0,3} Ga_{0,2} Fe_{1,8} O_{5,15},
Sr_{1,8} La_{0,2} Ga Fe O_{5,1},
Sr_{1,8} La_{0,2} Ga_{0,4} Fe_{1,6} O_{5,1} ou
Sr_{1,8} La_{0,2} Ga_{0,2} Fe_{1,8} O_{5,1}.

22. Matériau tel que défini l'une des revendications 7 et 17 dans lequel le composé (C₁) est choisi parmi les composés de formule :
La_{0,6} Sr_{0,4} Fe_{0,9} Ga_{0,1} O_{3-δ},
ou
La_{0,5} Sr_{0,5} Fe_{0,9} Ti_{0,1} O_{3-δ.},
et le composé (C₂) est choisi parmi l'oxyde de magnésium (MgO), l'oxyde d'aluminium (Al₂O₃), l'oxyde mixte de strontium et d'aluminium Sr₃Al₂O₆, l'oxyde mixte de baryum ou de titane (BaTiO₃).

23. Matériau tel que défini à la revendication 22 comportant entre 2% et 10% en volume d'oxyde de magnésium (MgO) et entre 90% et 98% en volume de La_{0,6} Sr_{0,4} Fe_{0,9} Ga_{0,1} O_{3-δ}.

24. Procédé de préparation du matériau tel que défini à l'une des revendications 1 à 23, **caractérisé en ce qu'**il comprend au moins une étape de frittage de mélange de poudres de composé (C₁) et de composé (C₂) en contrôlant la pression partielle en oxygène (pO₂) de l'atmosphère gazeuse environnant le milieu réactionnel.

25. Procédé tel que défini à la revendication 24, dans lequel l'étape de frittage est réalisée sous atmosphère gazeuse comprenant une pression partielle d'oxygène inférieure ou égale à 0,1 Pa.

26. Procédé tel que défini à l'une des revendications 24 ou 25, dans lequel le mélange de poudres de composé (C₁) et de composé (C₂) est préalablement mis en forme puis délianté avant l'étape de frittage.

27. Utilisation du matériau tel que défini à l'une des revendications 1 à 23, comme matériau conducteur mixte d'un réacteur catalytique membranaire, destiné à être mis en oeuvre pour synthétiser du gaz de synthèse par oxydation catalytique du méthane ou du gaz naturel et/ou comme matériau conducteur mixte d'une membrane céramique, destinée à être mise en oeuvre pour séparer l'oxygène de l'air.

28. Procédé pour inhiber et/ou contrôler la croissance cristalline des grains de composés conducteurs mixtes électronique et par ions oxydes lors de l'étape de frittage dans la préparation d'un réacteur catalytique membranaire, **caractérisé en ce qu'**il comprend une étape préalable de mélange de 75% à 99,99% en volume de conducteur mixte (C₁) et de 0,01 % à 25 % en volume de composé (C₂), (C₁) et (C₂) ayante été définis dans la revendication 1.

29. Procédé tel que défini à la revendication 28, comportant entre 2% et 10% en volume d'oxyde de magnésium (MgO) et entre 90% et 98% en volume de La_{0,6} Sr_{0,4} Fe_{0,9} Ga_{0,1} O_{3-δ}.

## Claims

1. Composite (M) comprising a mixture of:
- at least 75 vol% of a mixed electronic/oxygen O²⁻ anionic conducting compound (C₁) chosen from doped ceramic oxides which, at the use temperature, are in the form of a crystal lattice having oxide ion vacancies and more particularly in the form of a cubic phase, fluorite phase, aurivillius-type perovskite phase, brown-millerite phase or pyrochlore phase; and
- from 0.01 to 25 vol% of a compound (C₂), a blocking agent that inhibits crystal growth of the grains of compound (C₁), different from compound (C₁), chosen from ceramics of oxide type, ceramics of nonoxide type, metals, metal alloys or mixtures of these various types of materials; and
- from 0 vol% to 2.5 vol% of a compound (C₃) produced from at least one chemical reaction represented by the equation:
xF_{C1} + yF_{C2} → zF_{C3},
in which equation F_{C1}, F_{C2} and F_{C3} represent the respective crude formulae of compounds (C₁), (C₂) and (C₃) and x, y and z represent rational numbers greater than or equal to 0.

2. Composite as defined in Claim 1, in which the grains of compound (C₂) have an equiaxed shape with a diameter ranging from 0.1 µm to 5 µm and preferably less than 1 µm.

3. Composite as defined in either of Claims 1 and 2, in which the volume fraction of compound (C₃) does not exceed 1.5% and more particularly does not exceed 0.5% by volume.

4. Composite as defined in Claim 3, in which the volume fraction of compound (C₃) in the composite tends toward 0.

5. Composite as defined in one of Claims 1 to 4, in which the volume fraction of compound (C₂) is not less than 0.1% but does not exceed 10%.

6. Composite as defined in Claim 5, in which the volume fraction of compound (C₂) does not exceed 5%.

7. Composite as defined in one of Claims 1 to 6, in which compound (C₂) is chosen from oxide-type materials and preferably from magnesium oxide (MgO), calcium oxide (CaO), aluminum oxide (Al₂O₃), zirconium oxide (ZrO₂), titanium oxide (TiO₂), mixed strontium aluminum oxides SrAl₂O₄ or Sr₃Al₂O₆, mixed barium titanium oxide (BaTiO₃), mixed calcium titanium oxide (CaTiO₃), La_{0.5} Sr_{0.5} Fe_{0.9} Ti_{0.1} O_{3-δ} or La_{0.6} Sr_{0.4} Fe_{0.9} Ga_{0.1} O_{3-δ}.

8. Composite as defined in one of Claims 1 to 6, in which compound (C₂) is chosen from materials of the nonoxide type and preferably from silicon carbide (SiC), boron nitride (BN), nickel (Ni), platinum (Pt), palladium (Pd) and rhodium (Rh).

9. Composite as defined in one of Claims 1 to 8, in which compound (C₁) is chosen from oxides of formula (I):
(RₐO_{b})₁₋ₓ (R_{c}O_{d})ₓ (I),
in which:
Rₐ represents at least one trivalent or tetravalent atom mainly chosen from bismuth (Bi), cerium (Ce), zirconium (Zr), thorium (Th), gallium (Ga) and hafnium (Hf), and a and b are such that the structure RₐO_{b} is electrically neutral;
R_{c} represents at least one divalent or trivalent atom chosen mainly from magnesium (Mg), calcium (Ca), barium (Ba), strontium (Sr), gadolinium (Gd), scandium (Sc), ytterbium (Yb), yttrium (Y), samarium (Sm), erbium (Er), indium (In), niobium (Nb) and lanthanum (La), and c and d are such that the structure R_{c}O_{d} is electrically neutral; and in which x is generally between 0.05 and 0.30 and more particularly between 0.075 and 0.15.

10. Composite as defined in Claim 9, in which compound (C₁) is chosen from stabilized zirconias of formula (Ia) :
(ZrO₂)₁₋ₓ(Y₂O₃)ₓ (Ia),
in which x is between 0.05 and 0.15.

11. Composite as defined in one of Claims 1 to 8, in which compound (C₁) is chosen from perovskite oxides of formula (II):
[Ma₁₋ₓ₋ᵤMa'ₓMa"ᵤ][Mb_{1-y-v}Mb'_{y}Mb"ᵥ]O_{3-w} (II)
in which:
- Ma represents an atom chosen from scandium, yttrium, or from the families of lanthanides, actinides or alkaline-earth metals;
- Ma', which is different from Ma, represents an atom chosen from scandium, yttrium or from the families of lanthanides, actinides or alkaline-earth metals;
- Ma", which is different from Ma and Ma', represents an atom chosen from aluminum (Al), gallium (Ga), indium (In), thallium (Tl) or from the family of alkaline-earth metals;
- Mb represents an atom chosen from transition metals;
- Mb', which is different from Mb, represents an atom chosen from transition metals, aluminum (Al), indium (In), gallium (Ga), germanium (Ge), antimony (Sb), bismuth (Bi), tin (Sn), lead (Pb) and titanium (Ti);
- Mb", which is different from Mb and Mb', represents an atom chosen from transition metals, alkaline-earth metals, aluminum (Al), indium (In), gallium (Ga), germanium (Ge), antimony (Sb), bismuth (Bi), tin (Sn), lead (Pb) and titanium (Ti);
0 < x ≤ 0.5;
0 ≤ u ≤ 0.5;
(x + u) ≤ 0.5;
0 ≤ y ≤ 0.9;
0 ≤ v ≤ 0.9;
0 ≤ (y + v) ≤ 0.9; and
w is such that the structure in question is electrically neutral.

12. Composite as defined in Claim 11, in which compound (C₁) is chosen from compounds of formula (IIa):
La₍₁₋ₓ₋ᵤ₎Ma'ₓMa"ᵤMb_{(1-y-v)}Mb'_{y}Mb"ᵥO_{3-δ} (IIa),
corresponding to formula (II), in which Ma represents a lanthanum atom.

13. Composite as defined in either of Claims 11 and 12, in which compound (C₁) is chosen from compounds of formula (IIb):
Ma₍₁₋ₓ₋ᵤ₎SrₓMa"ᵤMb_{(1-y-v)}Mb'_{y}Mb"ᵥO_{3-δ} (IIb),
corresponding to formula (II) in which Ma' represents a strontium atom.

14. Composite as defined in one of Claims 11 to 13, in which compound (C₁) is chosen from compounds of formula (IIc):
Ma₍₁₋ₓ₋ᵤ₎Ma'ₓFe_{(1-y-v)}Mb'_{y}Mb"ᵥO_{3-δ} (IIC),
corresponding to formula (II) in which Mb represents an iron atom.

15. Composite as defined in one of Claims 11 to 14, in which compound (C₁) is chosen from compounds of formula (IId):
La₍₁₋ₓ₎SrₓFe₍₁₋ᵥ₎Mb"ᵥO_{3-δ} (IId),
corresponding to formula (II) in which u = 0, y = 0, Mb represents an iron atom, Ma represents a lanthanum atom and Ma' represents a strontium atom.

16. Composite as defined in one of Claims 11 to 15, in which compound (C₁) is a compound of formula:
La₍₁₋ₓ₋ᵤ₎SrₓAlᵤFe₍₁₋ᵥ)TiᵥO_{3-δ},
La₍₁₋ₓ₋ᵤ₎SrₓAlᵤFe₍₁₋ᵥ₎Gaᵥ O_{3-δ},
La₍₁₋ₓ₎SrₓFe₍₁₋ᵥ₎TiᵥO_{3-δ},
La₍₁₋ₓ₎SrₓTi₍₁₋ᵥ₎Feᵥ O_{3-δ},
La₍₁₋ₓ₎SrₓFe₍₁₋ᵥ₎GaᵥO_{3-δ} or
La₍₁₋ₓ₎SrₓFeO_{3-δ}.

17. Composite as defined in Claim 16, of formula:
La_{0.6} Sr_{0.4} Fe_{0.9} Ga_{0.1} O_{3-δ}, or
La_{0.5} Sr_{0.5} Fe_{0.9} Ti_{0.1} O_{3-δ}.

18. Composite as defined in one of Claims 11 to 17, in which compound (C₁) is chosen from those of formula (II') :
Ma^{(a)}₍₁₋ₓ₋ᵤ₎Ma'^{(a-1)}ₓMa"^{(a")}ᵤMb^{(b)}_{(1-s-y-}
ᵥ₎Mb^{(b+1)}ₛMb'^{(b+β)}_{y}Mb"^{(b")}ᵥO_{3-δ} (II'),
in which formula (II'):
a, a-1, a", b, (b+1), (b+β) and b" are integers representing the respective valences of the Ma, Ma', Ma", Mb, Mb' and Mb" atoms; and a, a", b, b", β, x, y, s, u, v and δ are such that the electrical neutrality of the crystal lattice is preserved,
a > 1;
a", b and b" are greater than zero;
- 2 ≤ β ≤ 2;
a + b = 6;
0 < s < x;
0 < x ≤ 0.5;
0 ≤ u ≤ 0.5;
(x + u) ≤ 0.5;
0 ≤ y ≤ 0.9;
0 ≤ v ≤ 0.9;
0 ≤ (y + v + s) ≤ 0.9;
[u (a" - a) + v (b" - b) - x + s + βy + 2δ] = 0;
and
δₘᵢₙ < δ < δₘₐₓ where
δₘᵢₙ = [u (a - a") + v (b - b") - βy] / 2 and
δₘₐₓ = [u (a - a") + v (b - b") - βy + x] /2
and Ma, Ma', Ma", Mb, Mb' and Mb" are as defined above, Mb representing an atom chosen from transition metals capable of existing in several possible valences.

19. Composite as defined in one of Claims 1 to 8, in which compound (C₁) is chosen from oxides of formula (III):
[Mc₂₋ₓMc'ₓ][Md_{2-y}Md'_{y}]O_{6-w} (III)
in which:
Mc represents an atom chosen from scandium, yttrium or from the families of lanthanides, actinides and alkaline-earth metals;
Mc', which is different from Mc, represents an atom chosen from scandium, yttrium or from the families of lanthanides, actinides and alkaline-earth metals;
Md represents an atom chosen from transition metals; and
Md', which is different from Md, represents an atom chosen from transition metals, aluminum (Al), indium (In), gallium (Ga), germanium (Ge), antimony (Sb), bismuth (Bi), tin (Sn), lead (Pb) and titanium (Ti); and
x and y are greater than or equal to 0 and less than or equal to 2 and w is such that the structure in question is electrically neutral.

20. Composite as defined in Claim 19, in which compound (C₁) is of formula (IIIa):
[Mc₂₋ₓLaₓ][Md_{2-y}Fe_{y}]O_{6-w} (IIIa),
a compound of formula (IIIb):
[Sr₂₋ₓLaₓ][Ga_{2-y}Md'_{y}]O_{6-w} (IIIb)
and more particularly a compound of formula (IIIc):
[Sr₂₋ₓLaₓ][Ga_{2-y}Fe_{y}]O_{6-w} (IIIc).

21. Composite as defined in Claim 20, in which compound (C₁) is of formula:
Sr_{1.4}La_{0.6}GaFeO_{5.3};
Sr_{1.6}La_{0.4}Ga_{1.2}Fe_{0.8}O_{5.3};
Sr_{1.6}La₀.₄GaFeO_{5.2};
Sr_{1.6}La_{0.4}Ga_{0.8}Fe_{1.2}O_{5.2};
Sr_{1.6}La_{0.4}Ga_{0.6}Fe_{1.4}O_{5.2};
Sr_{1.6}La_{0.4}Ga_{0.4}Fe_{1.6}O_{5.2};
Sr_{1.6}La_{0.4}Ga_{0.2}Fe_{1.8}O_{5.2};
Sr_{1.6}La_{0.4}Fe₂O_{5.2};
Sr_{1.7}La_{0.3}GaFeO_{5.15};
Sr_{1.7}La_{0.3}Ga_{0.8}Fe_{1.2}O_{5.15};
Sr_{1.7}La_{0.3}Ga_{0.6}Fe_{1.4}O_{5.15};
Sr_{1.7}La_{0.3}Ga_{0.4}Fe_{1.6}O_{5.15};
Sr_{1.7}La_{0.3}Ga_{0.2}Fe_{1.8}O_{5.15};
Sr_{1.8}La_{0.2}GaFeO_{5.1};
Sr_{1.8}La_{0.2}Ga_{0.4}Fe_{1.6}0_{5.1};or
Sr_{1.8}La_{0.2}Ga_{0.2}Fe_{1.8}O₅.₁.

22. Composite as defined in either of Claims 7 and 17, in which compound (C₁) is chosen from compounds of formula:
La_{0.6}Sr_{0.4}Fe_{0.9}Ga_{0.1}O_{3-δ} or
La_{0.5}Sr_{0.5}Fe_{0.9}Ti_{0.1}O_{3-δ},
and compound (C₂) is chosen from magnesium oxide (MgO), aluminum oxide (Al₂O₃), mixed strontium aluminum oxide Sr₃Al₂O₆ and mixed barium titanium oxide (BaTiO₃).

23. Composite as defined in Claim 22, which comprises between 2 and 10 vol% magnesium oxide (MgO) and between 90 and 98 vol% La_{0.6} Sr_{0.4} Fe_{0.9} Ga_{0.1} O_{3-δ}.

24. Method of preparing the composite as defined in one of Claims 1 to 23, **characterized in that** it includes at least one step of sintering a powder blend of compound (C₁) and compound (C₂), while controlling the oxygen partial pressure (pO₂) of the gaseous atmosphere surrounding the reaction mixture.

25. Method as defined in Claim 24, in which the sintering step is carried out in a gaseous atmosphere having an oxygen partial pressure of 0.1 Pa or less.

26. Method as defined in either of Claims 24 and 25, in which the powder blend of compound (C₁) and compound (C₂) undergoes, before the sintering step, a forming step followed by binder removal.

27. Use of the composite as defined in one of Claims 1 to 23 as a mixed conducting composite for a catalytic membrane reactor, intended to be used for the synthesis of syngas by catalytic oxidation of methane or natural gas and/or as mixed conducting composite for a ceramic membrane intended to be used for separating oxygen from air.

28. Method for inhibiting and/or controlling the crystal growth of the grains of mixed electronic/oxide ionic conducting compounds during the sintering step in the preparation of a catalytic membrane reactor, **characterized in that** it includes a prior step of blending 75 to 99.99 vol% of mixed conductor (C₁) with 0.01 to 25 vol% of compound (C₂), (C₁) and (C₂) having been defined in Claim 1.

29. Method as defined in Claim 28, comprising between 2 and 10 vol% magnesium oxide (MgO) and between 90 and 98 vol% La_{0,6}Sr_{0.4}Fe_{0.9}Ga_{0.1}O_{3-δ}.

## Patentansprüche

1. Verbundwerkstoff (M), der Folgendes in Mischung umfasst:
- mindestens 75 Vol.-% einer Mischleiterverbindung für Elektronen und Sauerstoffanionen O²⁻ (C₁), die aus den dotierten keramischen Oxiden gewählt ist, welche bei Verwendungstemperatur in Form eines Kristallgitters vorliegen, das Oxidionenlücken ausweist, und zwar insbesondere in Form einer kubischen Phase, einer Fluoritphase, einer Perowskitphase, eines aurivilliusartigen Gefüges, einer Brownmilleritphase, oder einer Pyrochlorphase, und
- 0,01 bis 25 Vol.-% einer Verbindung (C₂), wobei es sich um ein Blockierungsmittel handelt, welches das Kristallwachstum der Keime der Verbindung (C₁) hemmt, sich von der Verbindung (C₁) unterscheidet und aus den keramischen, oxidartigen Werkstoffen, den keramischen nicht oxidartigen Werkstoffen, den Metallen, den Metalllegierungen oder aber Mischungen aus diesen Werkstoffarten gewählt ist, sowie
- 0 Vol.-% bis 2,5 Vol.-% einer Verbindung (C₃), wobei es sich um das Produkt mindestens einer chemischen Reaktion handelt, die in der folgenden Gleichung dargestellt ist:
xF_{c1} + yF_{c2} ----> zF_{c3},
wobei F_{c1}, F_{c2} und F_{c3} für die Summenformeln der Verbindungen (C₁), (C₂) beziehungsweise (C₃) stehen und x, y, und z für rationale Zahlen stehen, die größer oder gleich 0 sind.

2. Werkstoff gemäß der Begriffsbestimmung in Anspruch 1, wobei die Keime der Verbindung (C₂) eine globulitische Form mit einem Durchmesser aufweisen, der 0,1 µm bis 5 µm beträgt und vorzugsweise geringer als 1 µm ist.

3. Werkstoff gemäß der Begriffsbestimmung in einem der Ansprüche 1 oder 2, wobei der Volumenanteil der Verbindung (C₃) 1,5 % oder weniger beträgt und insbesondere bei 0,5 Vol.-% oder weniger liegt.

4. Werkstoff gemäß der Begriffsbestimmung in Anspruch 3, wobei der Volumenanteil der Verbindung (C₃) in dem Werkstoff gegen 0 strebt.

5. Werkstoff gemäß der Begriffsbestimmung in einem der Ansprüche 1 bis 4, wobei der Volumenanteil der Verbindung (C₂) 0,1 % oder mehr beträgt, einen Wert von 10 % jedoch nicht übersteigt.

6. Werkstoff gemäß der Begriffsbestimmung in Anspruche 5, wobei der Volumenanteil der Verbindung (C₂) 5 % oder weniger beträgt.

7. Werkstoff gemäß der Begriffsbestimmung in einem der Ansprüche 1 bis 6, wobei die Verbindung (C₂) aus den oxidartigen Werkstoffen und vorzugsweise aus Magnesiumoxid (MgO), Calciumoxid (CaO), Aluminiumoxid (Al₂O₃), Zirkoniumoxid (ZrO₂), Titanoxid (TiO₂), den Strontium-Aluminium-Mischoxiden SrAl₂O₄ oder Sr₃Al₂O₆, Barium-Titan-Mischoxid (BaTiO₃), Calcium-Titan-Mischoxid (CaTiO₃), La_{0,5}Sr_{0,5}Fe_{0,9}Ti_{0,1}O_{3-δ} oder La_{0,6}Sr_{0,4}Fe_{0,9}Ga_{0,1}O_{3-δ} gewählt ist.

8. Werkstoff gemäß der Begriffsbestimmung in einem der Ansprüche 1 bis 6, wobei die Verbindung (C₂) aus den nicht oxidartigen Werkstoffen und vorzugsweise aus Siliciumcarbid (SiC), Bornitrid (BN), Nickel (Ni), Platin (Pt), Palladium (Pd) oder Rhodium (Rh) gewählt ist.

9. Werkstoff gemäß der Begriffsbestimmung in einem der Ansprüche 1 bis 8, wobei die Verbindung (C₁) aus den Oxiden nach der folgenden Formel (I) gewählt ist:
(RₐO_{b})₁₋ₓ(R_{c}O_{d})ₓ (I),
wobei:
Rₐ für mindestens ein dreiwertiges oder vierwertiges Atom steht, das im Wesentlichen aus Bismut (Bi), Cer (Ce), Zirkonium (Zr), Thorium (Th), Gallium (Ga) oder Hafnium (Hf) gewählt ist, wobei a und b derart beschaffen sind, dass die Struktur RₐO_{b} elektrisch neutral ist,
R_{c} für mindestens ein zweiwertiges oder dreiwertiges Atom steht, das im Wesentlichen aus Magnesium (Mg), Calcium (Ca), Barium (Ba), Strontium (Sr), Gadolinium (Gd), Scandium (Sc), Ytterbium (Yb), Yttrium (Y), Samarium (Sm), Erbium (Er), Indium (In), Niob (Nb) oder Lanthan (La) gewählt ist, wobei c und d derart beschaffen sind, dass die Struktur R_{c}O_{d} elektrisch neutral ist, und wobei x im Allgemeinen Werte von 0,05 bis 0,30 und insbesondere von 0,075 bis 0,15 annimmt.

10. Werkstoff gemäß der Begriffsbestimmung in Anspruch 9, wobei die Verbindung (C₁) aus den stabilisierten Zirkoniumoxiden nach der folgenden Formel (Ia) gewählt ist:
(ZrO₂)₁₋ₓ (Y₂O₃)ₓ (Ia),
wobei x zwischen 0,05 und 0,15 liegt.

11. Werkstoff gemäß der Begriffsbestimmung in einem der Ansprüche 1 bis 8, wobei die Verbindung (C₁) aus den Perowskit-Oxiden nach der folgenden Formel (II) gewählt ist:
[Ma₁₋ₓ₋ᵤMa'ₓMa"ᵤ][Mb_{1-y-v}Mb'_{y}Mb"ᵥ]O_{3-w} (II)
wobei
- Ma für ein Atom steht, das aus Scandium, Yttrium oder aus den Lanthaniden, den Actiniden oder den Erdalkalimetallen gewählt ist;
- Ma', welches sich von Ma unterscheidet, für ein Atom steht, das aus Scandium, Yttrium oder aus den Lanthaniden, den Actiniden oder den Erdalkalimetallen gewählt ist;
- Ma", welches sich von Ma und von Ma' unterscheidet, für ein Atom steht, das aus Aluminium (A1), Gallium (Ga), Indium (In), Thallium (T1) oder aus den Erdalkalimetallen gewählt ist;
- Mb für ein Atom steht, das aus den Übergangsmetallen gewählt ist;
- Mb', welches sich von Mb unterscheidet, für ein Atom steht, das aus den Übergangsmetallen, Aluminium (Al), Indium (In), Gallium (Ga), Germanium (Ge), Antimon (Sb), Bismut (Bi), Zinn (Sn), Blei (Pb) oder Titan (Ti) gewählt ist;
- Mb", welches sich von Mb und von Mb' unterscheidet, für ein Atom steht, das aus den Übergangsmetallen, den Erdalkalimetallen, Aluminium (A1), Indium (In), Gallium (Ga), Germanium (Ge), Antimon (Sb), Bismut (Bi), Zinn (Sn), Blei (Pb) oder Titan (Ti) gewählt ist;
0 < x ≤ 0,5;
0 ≤ u ≤ 0,5;
(x + u) ≤ 0,5;
0 ≤ y ≤ 0,9;
0 ≤ v ≤ 0,9;
0 ≤ (y + v) ≤ 0,9
und w derart beschaffen ist, dass die betreffende Struktur elektrisch neutral ist.

12. Werkstoff gemäß der Begriffsbestimmung in Anspruch 11, wobei die Verbindung (C₁) aus den Verbindungen nach der Formel (IIa) gewählt ist:
La₍₁₋ₓ₋ᵤ₎ Ma'ₓ Ma"u Mb_{(1y-v)} Mb'_{y} Mb"v O_{3-δ} (IIa),
welche der Formel (II) entspricht, wobei Ma für ein Lanthanatom steht.

13. Werkstoff gemäß der Begriffsbestimmung in einem der Ansprüche 11 oder 12, wobei die Verbindung (C₁) aus den Verbindungen nach der folgenden Formel (IIb) gewählt ist:
Ma₍₁₋ₓ₋ᵤ₎ Srₓ Ma"ᵤ Mb_{(1-y-v)} Mb'_{y} Mb"ᵥ O_{3-δ} (IIb),
welche der Formel (II) entspricht, wobei Ma' für ein Strontiumatom steht.

14. Werkstoff gemäß der Begriffsbestimmung in einem der Ansprüche 11 bis 13, wobei die Verbindung (C₁) aus den Verbindungen nach der folgenden Formel (IIc) gewählt ist:
Ma₍₁₋ₓ₋ᵤ₎ Ma'ₓ Ma"ᵤ Fe_{(1-y-v)} Mb'_{y} Mb"ᵥ O_{3-δ} (IIc),
welche der Formel (II) entspricht, wobei Mb für ein Eisenatom steht.

15. Werkstoff gemäß der Begriffsbestimmung in einem der Ansprüche 11 bis 14, wobei die Verbindung (C₁) aus den Verbindungen nach der folgenden Formel (IId) gewählt ist:
La₍₁₋ₓ₎ Srₓ Fe₍₁₋ᵥ₎ Mb"ᵥ O_{3-δ} (IId),
welche der Formel (II) entspricht, wobei u = 0 und y = 0 sind, Mb für ein Eisenatom steht, Ma für ein Lanthanatom steht, und Ma' für ein Strontiumatom steht.

16. Werkstoff gemäß der Begriffsbestimmung in einem der Ansprüche 11 bis 15, wobei es sich bei der Verbindung (C₁) um eine Verbindung nach den folgenden Formeln handelt:
La₍₁₋ₓ₋ᵤ₎ Srₓ Alᵤ Fe₍₁₋ᵥ₎ Tiᵥ O_{3-δ},
La₍₁₋ₓ₋ᵤ₎ Srₓ Alᵤ Fe₍₁₋ᵥ₎ Gaᵥ O_{3-δ},
La₍₁₋ₓ₎ Srₓ Fe₍₁₋ᵥ₎ Tiᵥ O_{3-δ},
La₍₁₋ₓ₎ Srₓ Ti₍₁₋ᵥ₎ Feᵥ O_{3-δ}
La₍₁₋ₓ₎ Srₓ Fe₍₁₋ᵥ₎ Gaᵥ O_{3-δ} oder
La₍₁₋ₓ₎ Srₓ Fe O_{3-δ}

17. Werkstoff gemäß der Begriffsbestimmung in Anspruch 16 nach den folgenden Formeln:
La_{0,6} Sr_{0,4} Fe_{0,9} Ga_{0,1} O_{3-δ} oder
La_{0,5} Sr_{0,5} Fe_{0,9} Ti_{0,1} O_{3-δ}.

18. Werkstoff gemäß der Begriffsbestimmung in einem der Ansprüche 11 bis 17, wobei die Verbindung (C₁) aus den Verbindungen nach der folgenden Formel (II') gewählt ist:
Ma^{(a)}₍₁₋ₓ₋ᵤ₎ Ma'^{(a-1)}ₓ Ma"^{(a")}ᵤ Mb^{(b)}_{(1-s-y-v)} Mb^{(b+1)}ₛ Mb'^{(b+β})_{y}
Mb"^{(b")}ᵥ O_{3-δ} (II'),
wobei in dieser Formel (II') Folgendes gilt: a, a-1, a", b, (b+1), (b+β) und b" sind ganze Zahlen, die für die jeweiligen Wertigkeiten der Atome Ma, Ma', Ma", Mb, Mb' und Mb" stehen; a, a", b, b", β, x, y, s, u, v und δ sind derart beschaffen, dass die elektrische Neutralität des Kristallgitters gewahrt bleibt,
a > 1,
a", b und b" sind größer als null;
-2 ≤ β ≤ 2;
a + b = 6;
0 < s < x;
0 < x ≤ 0,5;
0 ≤ u ≤ 0,5;
(x + u) ≤ 0,5;
0 ≤ y ≤ 0,9;
0 ≤ v ≤ 0,9;
0 ≤ (y + v + s) ≤ 0,9
[u.(a" - a) + v.(b" - b) - x + s + βy + 2δ] = 0
und δₘᵢₙ < δ < δₘₐₓ mit
δₘᵢₙ = [u.(a - a") + v.(b - b") - βy] / 2 und
δₘₐₓ = [u.(a - a") + v.(b - b") - βy + x] / 2
und Ma, Ma', Ma", Mb, Mb' und Mb" entsprechen den obigen Begriffsbestimmungen, wobei Mb für ein Atom steht, das aus den Übergangsmetallen gewählt ist, die mehrere Wertigkeitsstufen annehmen können.

19. Werkstoff gemäß der Begriffsbestimmung in einem der Ansprüche 1 bis 8, wobei die Verbindung (C₁) aus den Oxiden nach der folgenden Formel (III) gewählt ist:
[Mc₂₋ₓ Mc'ₓ] [Md_{2-y} Md'_{y}] O_{6-w} (III)
wobei:
Mc für ein Atom steht, das aus Scandium, Yttrium oder aus den Lanthaniden, den Actiniden oder den Erdalkalimetallen gewählt ist;
Mc', welches sich von Mc unterscheidet, für ein Atom steht, das aus Scandium, Yttrium oder aus den Lanthaniden, den Actiniden oder den Erdalkalimetallen gewählt ist;
Md für ein Atom steht, das aus den Übergangsmetallen gewählt ist; und
Md', welches sich von Md unterscheidet, für ein Atom steht, das aus den Übergangsmetallen, Aluminium (Al), Indium (In), Gallium (Ga), Germanium (Ge), Antimon (Sb), Bismut (Bi), Zinn (Sn), Blei (Pb) oder Titan (Ti) gewählt ist;
x und y größer oder gleich 0 und kleiner oder gleich 2 sind und w derart beschaffen ist, dass die betreffende Struktur elektrisch neutral ist.

20. Werkstoff gemäß der Begriffsbestimmung in Anspruch 19, wobei die Verbindung (C₁) der folgenden Formel (IIIa) entspricht:
[Mc₂₋ₓ Laₓ][Md_{2-y} Fe_{y}] O_{6-w}, (IIIa),
eine Verbindung nach Formel (IIIb):
[Sr₂₋ₓ Laₓ] [Ga_{2-y} Md'_{y}] O_{6-w} (IIIb)
und insbesondere eine Verbindung nach Formel (IIIc):
[Sr₂₋ₓ Laₓ] [Ga_{2-y} Fe_{y}] O_{6-w} (IIIc).

21. Werkstoff gemäß der Begriffsbestimmung in Anspruch 20, wobei die Verbindung (C₁) den folgenden Formeln entspricht:
Sr_{1,4} La_{0,6} Ga Fe O_{5,3},
Sr_{1,6} La_{0,4} Ga_{1,2} Fe_{0,8} O_{5,3},
Sr_{1,6} La_{0,4} Ga Fe O_{5,2},
Sr_{1,6} La_{0,4} Ga_{0,8} Fe_{1,2} O_{5,2},
Sr_{1,6} La_{0,4} Ga_{0,6} Fe_{1,4} O_{5,2},
Sr_{1,6} La_{0,4} Ga_{0,4} Fe_{1,6} O_{5,2},
Sr_{1,6} La_{0,4} Ga_{0,2} Fe_{1,8} O_{5,2},
Sr_{1,6} La_{0,4} Fe₂ O_{5,2},
Sr_{1,7} La_{0,3} Ga Fe O_{5,15}.
Sr_{1,7} La_{0,3} Ga_{0,8} Fe_{1,2} 05,15,
Sr_{1,7} La_{0,3} Ga_{0,6} Fe_{1,4} O_{5,15},
Sr_{1,7} La_{0,3} Ga_{0,4} Fe_{1,6} 05,15,
Sr_{1,7} La_{0,3} Ga_{0,2} Fe_{1,8} O_{5,15},
Sr_{1,8} La_{0,2} Ca Fe O_{5,1},
Sr_{1,8} La_{0,2} Ga_{0,4} Fe_{1,6} 05,1 oder
Sr_{1,8} La_{0,2} Ga_{0,2} Fe_{1,8} O_{5,1}.

22. Werkstoff gemäß der Begriffsbestimmung in einem der Ansprüche 7 bis 17, wobei die Verbindung (C₁) aus den Verbindungen nach der folgenden Formel gewählt ist:
La_{0,6} Sr_{0,4} Fe_{0,9} Ga_{0,1} O_{3-δ}, oder
La_{0,5} Sr_{0,5} Fe_{0,9} Ti_{0,1} O_{3-δ}
und wobei die Verbindung (C₂) aus Magnesiumoxid (MgO), Aluminiumoxid (Al₂O₃), Strontium-Aluminium-Mischoxid (Sr₃Al₂O₆) Barium- Titan-Mischoxid (BaTiO₃) gewählt ist.

23. Werkstoff gemäß der Begriffsbestimmung in Anspruch 22, welcher 2 bis 10 Vol.-% an Magnesiumoxid (MgO) und 90 bis 98 Vol.-% an La_{0,6} Sr_{0,4} Fe_{0,9} Ga_{0,1} O_{3-δ} aufweist.

24. Verfahren zur Herstellung des Werkstoff gemäß der Begriffsbestimmung in einem der Ansprüche 1 bis 23, **dadurch gekennzeichnet, dass** es mindestens einen Schritt umfasst, in welchem ein pulverförmiges Gemisch aus der Verbindung (C₁) und der Verbindung (C₂) gesintert wird, wobei in der Gasatmosphäre, welche das Reaktionsmilieu umgibt, der Sauerstoffpartialdruck (pO₂) gesteuert wird.

25. Verfahren gemäß der Begriffsbestimmung in Anspruch 24, wobei der Sinterungsschritt unter einer Gasatmosphäre durchgeführt wird, die einen Sauerstoffpartialdruck von höchstens 0,1 Pa umfasst.

26. Verfahren gemäß der Begriffsbestimmung in einem der Ansprüche 24 bis 25, wobei die pulverförmige Mischung aus der Verbindung (C₁) und der Verbindung (C₂) im Vorfeld geformt wird, woraufhin vor dem Sinterungsschritt das Bindemittel entfernt wird.

27. Verwendung des Werkstoffs gemäß der Begriffsbestimmung in einem der Ansprüche 1 bis 23 als Mischleiterwerkstoff eines katalytischen Membranreaktors, der dazu bestimmt ist, durch katalytische Oxidation von Methan oder Erdgas ein Synthesegas herzustellen, und/oder als Mischleiterwerkstoff einer keramischen Membran, die dazu bestimmt ist, Sauerstoff von der Luft abzutrennen.

28. Verfahren, das dazu dient, bei der Herstellung eines katalytischen Membranreaktors während des Sinterungsschritts das Kristallwachstum der Keime von Mischleiterverbindungen für Elektronen und Oxidionen zu hemmen und/oder zu steuern, **dadurch gekennzeichnet, dass** es im Vorfeld einen Schritt umfasst, bei welchem 75 bis 99,99 Vol.-% an Mischleiter (C₁) und 0,01 bis 25 Vol.-% an Verbindung (C₂) vermischt werden, wobei (C₁) und (C₂) der Begriffsbestimmung in Anspruch 1 entsprechen.

29. Verfahren gemäß der Begriffsbestimmung in Anspruch 28, welches 2 bis 10 Vol.-% an Magnesiumoxid (MgO) und 90 bis 98 Vol.-% an La_{0,6} Sr_{0,4} Fe_{0,9} Ga_{0,1} O_{3-δ} aufweist.
